# EUROPEAN PATENT SPECIFICATION

(11) **EP 1 067 171 B1**
(45) Date of publication and mention of the grant of the patent: **04.02.2004**
(21) Application number: 00203474.2
(22) Date of filing: 29.09.1997
(51) Int. Cl.: C10M 175/00, C10B 55/04, C10G 9/28, A62D 3/00, C10B 1/10, C10B 47/30, B01J 19/28

(54) **Process for removing contaminants from oil**
Verfahren zum Entfernen von Verunreinigungen aus Öl
Procédé pour éliminer des matières polluantes de l'huile

(30) Priority: 27.09.1996 CA 2186658
(43) Date of publication of application: 10.01.2001
(62) Divisional of application: 97307661.5
(73) Proprietor: Alberta Oil Sands Technology, and Research Authority, Calgary, Alberta T2P 3W2 (CA)
(72) Inventor: Taciuk, William, Calgary, Alberta (CA); Odut, Steve, Calgary (CA); Taciuk, Gordon, Calgary, Alberta (CA); Wheeler, Charlie, Calgary (CA)
(74) Representative: Robinson, Ian Michael

(56) References cited:
- EP-A- 0 028 666
- DE-A- 3 741 623
- DE-C- 699 707
- US-A- 4 473 464
- US-A- 5 271 808
- PATENT ABSTRACTS OF JAPAN vol. 014, no. 470 (C-0769), 15 October 1990 (1990-10-15) & JP 02 194097 A (MASANORI IWASE), 31 July 1990 (1990-07-31)

## Description

### FIELD OF THE INVENTION

The invention relates to a process for removing contaminants from used oil by subjecting the oil to vaporization and pyrolysis, whereby coke is formed. The contaminants remain with the coke, which can be separated from the oil. The invention further relates to a rotating, indirectly heated retort or reactor in which the process is practised.

### BACKGROUND OF THE INVENTION

Processes are known for reclaiming oil from contaminated used oil (sometimes referred to as waste oil).

One such process is disclosed in U.S. Patent 5,271,808, issued December 21, 1993 to Shurtleff. Shurtleff discloses a process wherein an inclined boiler heats the waste oil, vaporizing and driving off lighter hydrocarbons at temperatures of about 650 °F. Heavier hydrocarbons and contaminants, amounting to about 10 % of the original oil, collect as a sludge in the bottom of the boiler. The sludge drains for disposal. The lighter hydrocarbons are condensed as a reclaimed oil product.

However, Shurtleff's process produces an oily waste which itself requires specialized disposal.

Other methods which can produce a reclaimed oil and an oil-dry contaminant typically involve subjecting the waste oil to thermal pyrolysis.

For example, in U.S. Patent 5,423,891, issued to Taylor, a process is disclosed for the gasification of solids waste. Heat carrier solids (HCS) are first heated and then fed co-currently with hydrocarbon-bearing solids waste through a rotary kiln retort. The solids waste and HCS co-mingle, transferring heat. The resulting temperatures of 649°C to 816°C (1200°F to 1500°F) are suitable to thermally pyrolyse the hydrocarbons in the waste. The resultant vapours are extracted for condensation. The retort solids and HCS are discharged from the kiln for recovery of the retort solids and re-heating of the HCS.

In Taylor's system, the HCS are continuously circulated in a material handling loop. The HCS is a coarse granular solid which is heated outside the kiln and gives up its heat inside the kiln. Transport of the HCS around the loop involves considerable materials-handling equipment.

In U.S. Patent 4,473,464, issued to Boyer et al., a process is disclosed for treating heavy crude oil. Carbonaceous solids are finely ground for concurrent feed with crude oil to an indirectly heated kiln. Pyrolysed hydrocarbon vapours are condensed. Coke and carbonaceous solids are screened, ground and recycled outside the kiln. Heat loss to the solids is minimised and the crude oil is preheated to a temperature high enough to balance any temperature loss by the solids.

U.S. patent 4,303,477, issued to Schmidt et al., discloses co-currently adding a consumable fine-grained reactive solid to a waste material for binding metal and sulfur contaminants during treatment. The reactive solids, such as lime having a grain size typically less than 1 mm, and waste are thermally cracked as they progress through a rotating, indirectly fired kiln. The solids make a single pass through the kiln, the reactive solid being consumed in the process.

DE 699 707C discloses a process for converting oily and bituminous residues obtained from the pressure hydrogenation of coals, tars, mineral oils and the like or from the extraction of solid carbon-containing substances, especially coal. The process employs a rotary kiln provided with a change of filler bodies. The kiln is heated and feed added continuously. Oil vapours and coal dust are produced and then removed from the kiln.

However, the process of DE 699 707C requires the kiln to be partitioned into chambers and steam to be passed over the material in counterflow. In addition, material is required to be discharged into an end chamber and then coal dust is picked up and removed via a chute.

CA 1 334 129 discloses a process for the thermal decomposition of bitumen. The process employs a rotating cylindrical reactor charged with grinding bodies into which pre-heated bitumen is sprayed. The bitumen is heated to produce pyrolysis gas and coke which are continuously removed.

However, the process of CA 1 374 129 further comprises the step of the gas and coke passing through radial apertures in the reactor to a hollow ring which seals around the reactor and from which extend a gas removal member and coke removal member. Some of the above described prior art processes involve significant material handling challenges in the recycling and conveyancing of large masses of hot, coarse solids. Other processes, which do not recycle hot solids, involve rejection of a portion of the oily waste or irreversibly consume a catalyst.

There is therefore a need for a simplified process for separating contaminants from used oils. It is the object of the present invention to provide such a process.

### SUMMARY OF THE INVENTION

The present invention provides a simple process for reclaiming oil from used, contaminated oil feed. In general, the process comprises feeding used oil through a feed line to a rotating thermal reactor wherein the oil is pyrolysed to produce hydrocarbon vapour and coke. The contaminants become associated with the coke. The vapour and coked solids are removed from the reactor. The vapour is condensed to produce a contaminant-free oil product and the contaminant-rich coked solids are collected for disposal, possibly as feed for a cement kiln.

The equipment used in the process includes a reactor comprising a rotating vessel housed in a heating chamber, means for feeding used oil into the rotating vessel, and an oil recovery system comprising a vapour extraction pipe, a solids removal cyclone, and vapour condensation equipment.

More particularly, the rotating vessel is indirectly heated so that its internal surfaces are sufficiently hot to vaporize and pyrolyse the feed oil. The feed oil is introduced into the vessel chamber wherein it vaporizes and pyrolyses, forming hydrocarbon vapour and coke. Metals and other contaminants become associated with the coke. A charge of coarse granular solids is provided within the vessel chamber. As the vessel rotates, the granular solids scour the vessel's internal surface and comminute the coke into fine solids. The fine solids may include solids introduced with the feed oil. The vapour is extracted from the vessel chamber through an axial pipe. The fine solids are separated within the vessel chamber from the coarse granular solids for removal from the vessel, preferably using a spiral chute. The chute spirals from a screened entrance at the vessel's circumference to a discharge outlet at the vessel's axis. The chute's screen excludes coarse solids and collects only the fine solids. The fine solids are conveyed out of the vessel for disposal. Fine solids may also be elutriated with the vapours. Any fine solids associated with the vapours are separated out. The substantially solids-free vapours are then condensed to yield product oil. The contaminant-rich fine solids are collected for disposal.

Only a small portion of the feed oil is converted to coke, the remainder being recovered as a substantially contaminant-free product oil.

### BRIEF DESCRIPTION OF THE DRAWINGS

Figure 1 is a schematic flow diagram of a contaminated oil thermal treatment reactor, heating chamber and hydrocarbon vapour condensation system for use with the present invention;
Figure 2 is a cross-section of the heating chamber, reactor, rotary drive and support equipment for use with the present invention;
Figure 3 is a cross-sectional view of the reactor vessel along line III-III of Figure 2, showing in particular the fine solids removal chute; and
Figure 4 is a partial cross-sectional view of the second end of the reactor vessel, featuring the fine solids removal chute and screw conveyor.

### DESCRIPTION OF THE PREFERRED EMBODIMENT

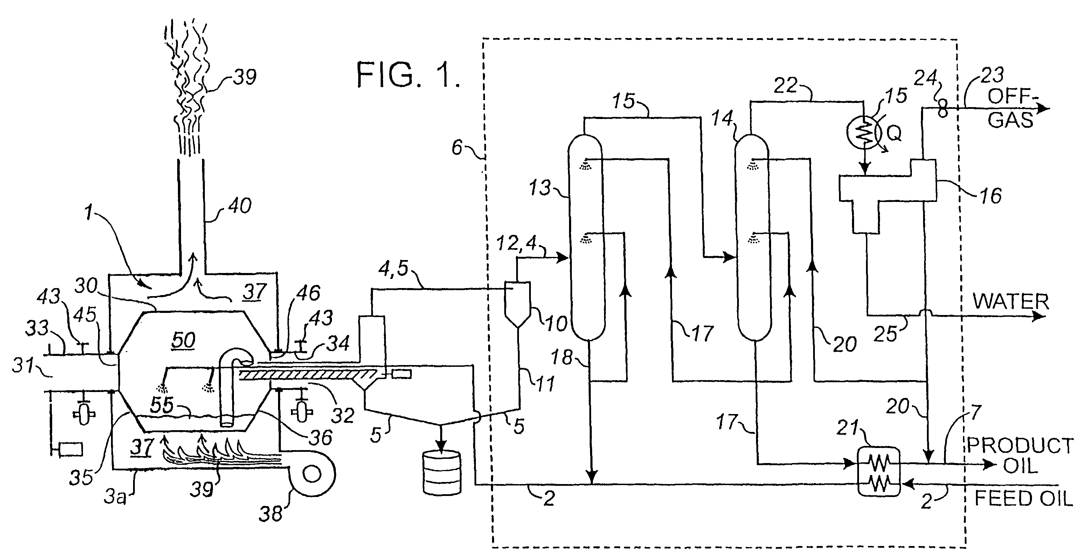

Having reference to Figure 1, the process is described in overview. A reactor 1 is provided for thermally treating used contaminated oil 2. The reactor 1 is housed within a heating chamber 3 formed by a housing 3a. Heat is generated in the chamber 3 to heat the reactor 1. Feed oil 2, contaminated with metals and one or both of water and solids, is fed to the reactor 1 for the separation of the contaminant from the oil component. Within the reactor 1: the feed oil is vaporised and pyrolysed, producing a hydrocarbon vapour stream 4, which may contain steam; coke 5 is formed as a byproduct; metals and solid contaminants become associated with the coke 5; and the coke 5 is separated from the hydrocarbon vapours 4. The hydrocarbon vapours 4 leave the chamber 3 and are conveyed to a vapour condensation system 6. Here the hydrocarbon vapour 4 are condensed as a substantially contaminant-free product oil 7, which is suitable to provide refinery feedstock. The coke 5 is removed from the reactor chamber 3 and is stockpiled or used as fuel.

In more detail, the vapour condensation system 6 comprises a cyclone 10 for stripping fine solids 11, including coke, from the hot reaction zone vapours 4. The stripped solids 11 are discharged for disposal. The stripped vapour 12 proceeds to a vapour scrubber tower ("scrubber") 13, a quench tower ("quencher") 14, a heat exchanger 15 and on into an overhead drum 16. In the scrubber 13, light oil reflux 17 from the quencher 14 and re-circulated scrubber oil 18 cause a heavy fraction of the hydrocarbon vapour 12 to condense (forming the scrubber oil 18), capturing any solids not removed by the cyclone 10. The heavy scrubber oil 18 is recycled to the reactor 1 by co-mingling it with the feed oil 2 before treatment. Un-condensed vapour 19 from the scrubber 13 is directed to the quencher tower 14 where light condensed oil 20 from the overhead drum and recycled quencher oil 17 are refluxed for condensation of the majority of the vapour 19. The quencher oil 17 is passed through a heat exchanger 21 for preheating the feed oil 2. Un-condensed vapour 22 is directed to the overhead drum 16 for the separation of water from the lightest fraction of the condensed oil 20 and from non-condensible off-gases 23. An off-gas compressor 24 provides the impetus necessary to draw vapour 4 from the reactor 1. Any separated water is discharged as a water product 25. The overhead drum oil 20 and quencher oil 17 are combined to form the product oil 7.

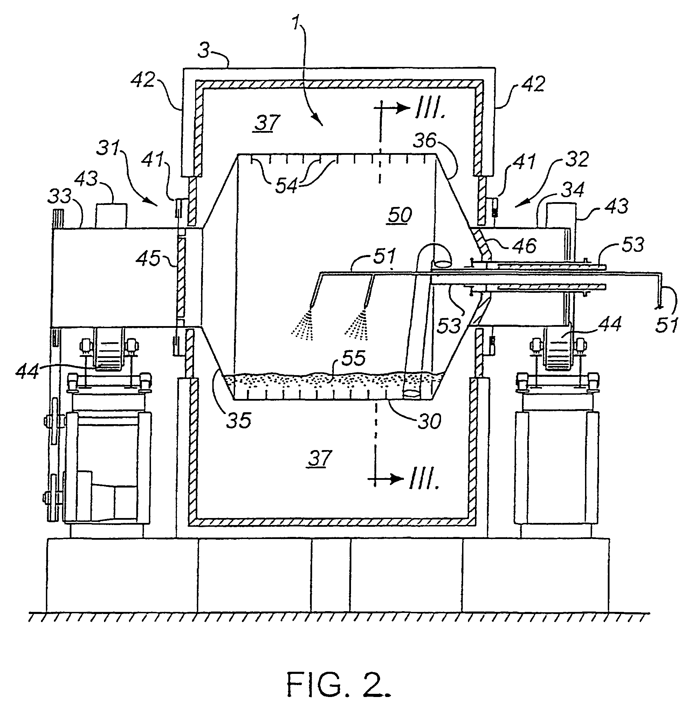

More specifically, and having reference to Figures 2 through 4, the reactor 1 comprises a cylindrical vessel 30 having a first end 31 and a second end 32. Cylinders 33,34 are structurally connected to the vessel 30 with conical transition sections 35,36 and extend axially from the first and second ends 31,32 respectively.

The vessel 30 is rotatably supported within the heating chamber 3. An annular space 37 is formed between the chamber housing 3a and the vessel 30.

Turning briefly back to the schematic shown in Figure 1, burner 38 discharges heated combustion gas 39 for circulation through the annular space 37. A flue stack 40 at the top of the chamber 3 exhausts spend combustion gases 39.

The first and second end cylinders 33,34 extend through rotary seals 41 formed in the side walls 42 of the chamber housing 3. Riding rings 43 are mounted circumferentially to the cylinders 33,34, positioned outside of the chamber housing side walls 42. The riding rings and vessel are supported on rollers 44.

The inside of the vessel 30 is sealed at its first and second ends 31,32 by first and second panels 45,46 respectively forming a reaction zone 50.

A vapour pipe 53 extends through axis of the second panel 46. The vapour pipe 53 connects the reaction zone 50 and the condensation system 6. A feed oil line 51 extends through the second end panel 46. The line 51 distributes and discharges feed oil 2 in the reaction zone 50.

The vessel 30 contains internal heat transfer enhancing surfaces in the form of radially and inwardly extending rings or fins 54.

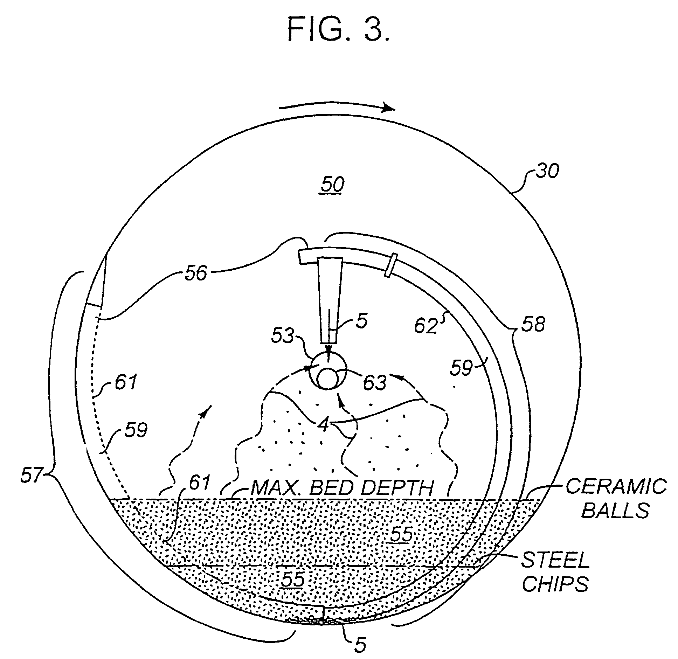

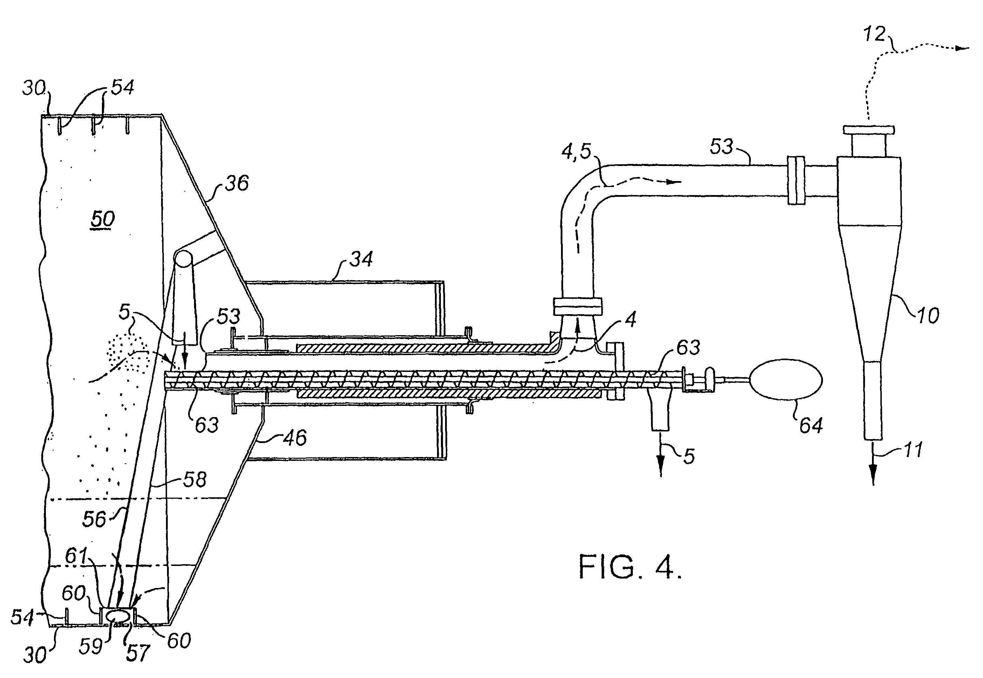

Having reference now to Figures 3 and 4, the reaction zone 50 is charged with coarse granular solids which are non-ablating and are permanently resident within the vessel 30. The coarse granular solids form a bed 55 in the bottom of the vessel chamber 50.

At the second end of the vessel 30 is a chute 56 for fines removal. The chute 56 has a circumferentially extending first portion 57 connected to a spiral second portion 58. The chute 56 forms a passageway 59 for the transport of fine solids to the vapour pipe 53. The chute extends opposite to the direction of rotation, from the first portion 57 to the second portion 58. Thus fine solids enter the first portion 57 of the chute 56 and advance through the second portion 58 as the vessel 30 rotates.

The chute's first portion 57 lies against the inside circumference of the vessel 30 and extends circumferentially for about 120°. The chute's first portion 57 comprises side walls 60 conveniently formed by adjacent fins 54, and a bottom formed by the wall of the vessel 30 at its outer radius. The inner radius or top of the first portion 57 is fitted with a screen 61. The screens openings 61 are small enough to exclude the coarse granular solids yet permit passage of finer solids.

The chute's second portion 58 is connected to the end of the first portion 57 and comprises a spiral pipe 62 which spirals inwardly from the vessel's circumference towards the vessel's centerline. The spiral pipe 62 rotates through about 180° to direct fine solids into the end of the vapour pipe 53. A screw conveyor 63 lies along the bottom of the vapour pipe 53 and extends therethrough to a point outside the heating chamber 3. A drive 64 rotates the screw conveyor 63.

Referring again to Figure 1, in operation, the vessel 30 is rotated on its axis. Radiant and conductive heat from the burner's combustion gases 39 heat the annulus 37 and the walls of the vessel 30. The rotary seals 41 are cooled with a flow of combustion air (not shown).

Heat is indirectly transferred by conduction through the walls of the vessel 30 to the reaction zone 50. Heat is transferred from the vessel's walls and fins 54 to the granular solids to maintain their temperature at about 427-704°C (800-1300°F) which is sufficiently high so that feel oil is vaporised and pyrolized. Typically, the corresponding range of heating chamber temperatures required is about 527-788°C (1025-1450°F).

Contaminated oil 2 is fed through line 51 to the vessel 30. If liquid water is fed to the reaction zone 50, it will flash and can upset the sub-atmospheric pressure balance. Preheating the oil 2 via exchanger 21 vaporizes water to steam and aids in conservation of heat. Small amounts of water (say less than about 1 wt.%) present in the feed oil 2 may not require preheating.

As the vessel 30 rotates, the granular solids form a bed 55 which continuously brings bed's contents into contact with the vessel's walls 30 and fins 54, scouring the contacted surfaces. The granular solids absorb heat as they contact the vessel 30.

In a first embodiment, the feed oil 2 is directed to contact the reactor vessel cylindrical wall just before it rotates under the bed 55: The thermal mass of the vessel 30 provides sufficient heating load to substantially instantaneously vaporise and pyrolyse the oil. Hydrocarbon vapour 4 is produced and a solid coke byproduct 5 forms on the surfaces of the cylindrical walls of the vessel 30 and the fins 54.

Contaminants, such as metals and solids, remain substantially associated with the coke.

In a second embodiment, the oil is directed to contact the bed 55 which is maintained at pyrolysis temperatures through conductive heat transfer with the wall. The bed 55 is required to provide the thermal load to pyrolyse the oil. The wall of the vessel 30 is maintained at higher temperature than in the first embodiment as required to maintain sufficient temperature of the granular solids in the bed 55.

In both embodiments, the bed of granular solids scour the vessel walls and fins. The contaminant-rich coke and solids, which may have been associated with the feed oil, are scoured and thereby comminuted into fine solids which are free of the walls and the coarse granular solids.

Produced vapour 4 is extracted through the vapour pipe 53. The velocity of the vapour exiting the reactor vessel will elutriate some of the fine solids 5. The elutriated fine solids 5 exit the vapour pipe 53 and are passed through the cyclone 10 for separation of the solids 5 from the vapour stream 4.

As described above, the vapour stream 4 is passed through the condensation system 6, resulting in a liquid product 7 and a non-condensible off-gas stream 23. The liquid product 7 is sufficiently free of contaminants so as to be acceptable as a refinery feedstock. The off-gases 23 may be flared or be recycled to fuel the heating chamber burners 38.

The performance of the system is illustrated in the following example:

### EXAMPLE 1

A cylindrical reactor vessel 30, 3.0m (10 feet) in diameter and 2.4 m (8 feet) in length, was constructed of 12.7mm (1/2") thick stainless steel. A plurality of 101.6mm (4") tall, 12.7mm (1/2") thick fins 54 were installed, at 203.2mm (8") spacings. Two 1.2m (4 foot) diameter cylinders formed the first and second ends 31, 32. A riding ring 43 was located on each cylindrical end and was rotatably supported on solid rubber rollers mounted on walking beams. A sprocket at the extreme outboard end of the first end cylinder and chain drive enabled rotation of the vessel.

The chute 56 comprised a 203.2mm (8") by 101.6mm (4") rectangular section first portion 57 and a 101.6mm (4") diameter pipe spiral second portion 58. The chute encompassed about 330° of rotation.

In a first test, the vessel was charged with 3856kg (8500) pounds of inert ceramic balls available under the trade mark Denstone 2000, from Norton Chemical Process Products Corp, Akron, OH. As seen in Figure 3, this produced a deep bed, the chord of which was about 120°. The vessel was rotated at 3 to 4 rpm. The feed oil was directed to be distributed along the rolling bed.

Two burners 38 provided about 586200W (two million BTU/hr) for maintaining the heating chamber 3 at about 749° (1380°F). The resulting heat transfer through the vessel wall raised the temperature of the ceramic balls to about 429°C (805°F).

29.4m³ per day (185 barrels per day) of 28° API contaminated lube oil was preheated to 249°C (480°F) before discharging it into the reactor 1. The oil contained about 0.6% water. The reactor was maintained at a slight vacuum of -25.4 to -50.8 mm (-1 to -2 inches) of water column.

Vapour was extracted from the reaction zone 50 and condensed to produce 27.8m³ per day (175 bbl/day) of 32° API product oil. The product oil was primarily quencher oil (95 to 98%) with a small contribution (2 to 5%) from the overhead drum oil. Vapour scrubber bottom oil was recycled to the reactor 1 at about 2.9 m³ per day (18.5 bbl/day) (note that the solids fraction for this test was about 0.5% and is expected to be higher in other tests). The total production of non-condensible off-gases was 1912 kg/day. A further 147 kg/day of water was separated and produced from the condensation system.

Coke, containing contaminants, was produced at rates of 445 kg/day. In summary:

**TABLE 1**

| | |
|---|---|
| Feed Rate | 29.4m³/day (18.5 bbl/day)28° API |
| Scrubber recycle | 2.9m³/day (18.5 bbl/day)(<0.5% solids) |
| Product oil | 27.8m³/day (175 bbl/day) 32° API |
| Off-gas | 1912 kg/day |
| Water | 147 kg/day |
| Coke | 445 kg/day |

An analysis of the feed oil and the product oil confirmed a 99.84% removal of metals. This was achieved with only a 5.4% reduction in the original volume of feed oil, demonstrating little degradation of the feed oil. The resulting oil was slightly lighter product, having reduced its gravity from 28 to 32 API. Total halides were also reduced by 80%. A more detailed, analysis is shown in Table 2.

**TABLE 2**

| Parameter | Feed Oil ug/g | Quencher Oil ug/g | Scrubber Oil ug/g | Coke ug/g |
|---|---|---|---|---|
| Aluminum | 9.4 | 0 | 4.1 | 1100 |
| Barium | 5.6 | 0 | 2.1 | 230 |
| Beryllium | 0 | 0 | 0 | 0 |
| Calcium | 870 | 0 | 95 | 51700 |
| Cadmium | 0.7 | 0 | 0.2 | 41 |
| Cobalt | 0.04 | 0 | 0.04 | 26 |
| Chromium | 1 .8 | 0 | 0.29 | 130 |
| Copper | 46 | 0.02 | 5.7 | 2400 |
| Iron | 120 | 0.12 | 21 | 8400 |
| Lead | 61 | 0 | 27 | 3000 |
| Magnesium | 390 | 0 | 45 | 23700 |
| Manganese | 68 | 0.02 | 8.8 | 4000 |
| Molybdenum | 12 | 0 | 1.5 | 720 |
| Nickel | 0.95 | 0 | 0.34 | 110 |
| Potassium | 130 | 0 | 14 | 4000 |
| Silver | 0 | 0 | 0 | 0 |
| Sodium | 380 | 1.9 | 51 | 21000 |
| Strontium | 1.6 | 0 | 0.23 | 97 |
| Titanium | 0.72 | 0 | 0.32 | 69 |
| Vanadium | 0 | 0 | 0 | 0 |
| Zinc | 880 | 0.27 | 170 | 51400 |
| Zirconium | 0.02 | 0 | 0 | 3 |
| Boron | 11 | 1.1 | 0.78 | 130 |
| Phosphorus | 820 | 2.8 | 160 | 50800 |
| Total Metals | 3808.8 | 6.2 | | |
| Halides | 490 | 98.5 | | |

Assuming no metals reported to the overhead oil, the reduction of metals from the feed oil to the product oil was determined to be (3808.8-6.2)/3808.8 = 99.8 %. The metals reported substantially to the coke.

The reduction in halides was found to be (490-98.5)/490 = 80 %.

The ceramic balls were not entirely successful in scouring all of the coke from the reactor vessel walls. Thus, most of the fine coke was produced via elutriation and not through the spiral chute whose screen became blinded by coke accumulation.

### EXAMPLE II

In a second test run performed on the same equipment, the ceramic balls were replaced with a charge of cylindrical (25.4 to 50.8mm (1 to 2") diameter, 12.7mm (1/2") thick spring steel punchings or chips. Also shown in Figure 3, about 1497 kg (3300 pounds) of chips formed a shallow bed level in the vessel having a bed chord angle of about 75°.

The feed oil was directed to impinge directly upon the reactor vessel wall. The thermal load to vaporize the oil was provided by the wall itself and not the steel chips. Thus, the wall did not need to conduct a large amount of heat to the chips through conduction and the wall temperature was correspondingly lower.

The steel chips successfully scoured coke from the vessel walls, sufficient to prevent blinding of the chute's screen and permit sustainable extraction of fine coke from the reaction zone as it was produced.

A comparison of the process temperature conditions in both the ceramic ball and steel chip runs are as follows, presented in Table 3 (rounded to the nearest 2.8°C (5°F).

**TABLE 3**

| (°F) [°C] | | |
|---|---|---|
| | **Balls** **EXAMPLE I** | **Chips** **EXAMPLE II** |
| Reactor Bed | 805 [429] | 840 [449] |
| Reactor Vessel Wall | 1290 [699] | 930 [499] |
| Heating Chamber | 1380 [749] | 1020 [549] |
| Feed Oil | 480 [249] | 480 [249] |
| Vapour Scrubber | 700 [371] | 700 [371] |
| Quencher | 465 [241] | 465 [241] |
| Overhead Drum | 85 [ 29] | 85 [ 29] |

The above process embodies the following advantages:
- it is a continuous process with continuous removal of coke containing contaminants;
- removal of contaminants is achieved with minimal degradation of the feed oil;
- there is a minimal requirement for materials handling equipment, comprising only of a rotating vessel, a screw conveyor and a cyclone;
- avoiding the use of consumables; and
- simplicity of operation.

## Claims

1. A thermal process for removing contaminants from used oil comprising:
providing a rotating vessel having a circumferential wall and end walls forming a single internal reaction chamber;
providing a charge of non-ablating coarse granular solids which form a bed within the reaction chamber;
heating the outside of the vessel so as to indirectly heat the reaction chamber and the bed of coarse granular solids by conduction through the vessel's walls; to a temperature in the range of 800 - 1300°F (427 - 704°C);
feeding contaminated used oil through the one of the vessel's end walls so that it discharges into the reaction chamber;
vaporizing and pyrolyzing the oil within the hot reaction chamber to produce hydrocarbon vapours and deposit coke, whereby substantially all of the contaminants become associated with the coke;
scouring the vessel walls with the bed of coarse granular solids to remove coke deposits and comminute the coke into fine solids;
separating, within the reaction chamber, the fine solids from the bed of coarse solids;
removing the hydrocarbon vapours and fine solids axially from the reaction chamber and vessel;
recovering the fine solids and vapours separately; and
condensing the vapours to recover substantially contaminant-free product oil.

2. The thermal process as recited in claim 1 wherein some of the fine solids are removed from the reaction chamber by elutriation with the hydrocarbon vapours.

3. The thermal process as recited in claim 1 wherein the fine solids are removed from the reaction chamber by a combination of:
elutriation of fine solids with the hydrocarbon vapour; and
separating fine solids from the bed of coarse solids by screening within the reaction chamber and conveying the fine solids out of the reaction chamber through a spiral chute.

4. The thermal process as recited in claim 3 wherein the feed oil is discharged so as to contact the circumferential vessel wall.

5. The thermal process as recited in claim 3 wherein the feed oil is discharge so as to contact the bed of coarse solids.

6. The thermal process as recited in claim 3 wherein the feed oil is preheated, to a temperature sufficient to vaporize water, prior to discharge into the reaction chamber.

7. The thermal process as recited in claim 4, 5 or 6 wherein the coarse solids are a plurality of steel chips.

8. The thermal process as recited in claim 1 wherein the contaminants comprise metals and fine solids.

9. The thermal process as recited in claim 6 wherein the contaminants include water.

## Patentansprüche

**1.** Thermisches Verfahren zum Entfernen von Verunreinigungen aus gebrauchtem Öl, das umfasst:
Bereitstellen eines sich drehenden Behälters mit einer Umfangswand und Stirnwänden, die eine einzelne innere Reaktionskammer bilden;
Bereitstellen einer Beschickung aus nicht abtragenden groben kömigen Feststoffen, die ein Bett in der Reaktionskammer bilden;
Erhitzen der Außenseite des Behälters, um die Reaktionskammer und das Bett aus groben körnigen Feststoffen durch Leitung über die Wände des Behälters indirekt auf eine Temperatur im Bereich 800 - 1300°F (427 - 704°C) zu erhitzen;
Einleiten von verunreinigtem gebrauchtem Öl über eine der Stirnwände des Behälters, so dass es in die Reaktionskammer austritt;
Verdampfen und Pyrolisieren des Öls in der heißen Reaktionskammer, um Kohlenwasserstoffdämpfe zu erzeugen und Koks abzulagern, wobei im Wesentlichen alle Verunreinigungen mit dem Koks verbunden werden;
Reinigen der Behälterwände mit dem Bett aus groben körnigen Feststoffen, um Koksablagerungen zu entfernen und den Koks zu feinen Feststoffen zu zerkleinern;
Trennen der feinen Feststoffe von dem Bett aus groben Feststoffen in der Reaktionskammer;
axiales Entfernen der Kohlenwasserstoffdämpfe und der feinen Feststoffe aus der Reaktionskammer und dem Behälter;
separates Zurückgewinnen der feinen Feststoffe und der Dämpfe; und
Kondensieren der Dämpfe, um im Wesentlichen verunreinigungsfreies Produktöl zurückzugewinnen.

**2.** Thermisches Verfahren nach Anspruch 1, wobei einige der feinen Feststoffe durch Elutriation mit den Kohlenwasserstoffdämpfen aus der Reaktionskammer entfernt werden.

**3.** Thermisches Verfahren nach Anspruch 1, wobei die feinen Feststoffe aus der Reaktionskammer entfernt werden durch eine Kombination aus:
Elutriation feiner Feststoffe mit dem Kohlenwasserstoffdampf; und
Trennen feiner Feststoffe von dem Bett grober Feststoffe durch Sichten in der Reaktionskammer und Befördern der feinen Feststoffe aus der Reaktionskammer über eine Wendelrutsche.

**4.** Thermisches Verfahren nach Anspruch 3, wobei das eingeleitete Öl so ausgestoßen wird, dass es mit dem Bett aus groben Feststoffen in Kontakt kommt.

**6.** Thermisches Verfahren nach Anspruch 3, wobei das eingeleitete Öl vor dem Austreten in die Reaktionskammer auf eine Temperatur vorerhitzt wird, die ausreicht, um Wasser zu verdampfen.

**7.** Thermisches Verfahren nach Anspruch 4, 5 oder 6, wobei die groben Feststoffe eine Vielzahl von Stahlspänen sind.

**8.** Thermisches Verfahren nach Anspruch 1, wobei die Verunreinigungen Metalle und feine Feststoffe umfassen.

**9.** Thermisches Verfahren nach Anspruch 6, wobei die Verunreinigungen Wasser einschließen.

## Revendications

1. Procédé thermique pour éliminer des contaminants dans une huile usée, comprenant les étapes consistant à :
se munir d'un récipient rotatif ayant une paroi circonférentielle et des parois d'extrémité formant une chambre réactionnelle interne unique ;
disposer une charge de solides granulaires grossiers non susceptibles d'être usés et formant un lit, à l'intérieur de la chambre réactionnelle ;
chauffer l'extérieur du récipient de façon à chauffer indirectement la chambre réactionnelle et le lit de solides granulaires grossiers par conduction au travers des parois du récipient ; jusqu'à une température située dans la plage de 427 à 704°C (800 à 1300°F) ;
introduire de l'huile usée contaminée par l'une des parois d'extrémité du récipient de façon qu'elle soit déchargée dans la chambre réactionnelle ;
vaporiser et pyrolyser l'huile à l'intérieur de la chambre réactionnelle chaude pour produire des vapeurs d'hydrocarbures et déposer du coke, en conséquence de quoi pratiquement tous les contaminants se retrouvent associés au coke ;
frotter les parois du récipient avec le lit de solides granulaires grossier pour éliminer les dépôts de coke et fragmenter le coke en solides fins ;
séparer, à l'intérieur de la chambre réactionnelle, les solides fins d'avec le lit de solides grossiers ;
éliminer les vapeurs d'hydrocarbures et les solides fins axialement à partir de la chambre réactionnelle et du récipient ;
récupérer les solides fins et les vapeurs séparément ; et
condenser les vapeurs pour récupérer l'huile produite pratiquement exempte de contaminants.

2. Procédé thermique selon la revendication 1, dans lequel une partie des solides fins est retirée de la chambre réactionnelle par élutriation avec les vapeurs d'hydrocarbures.

3. Procédé thermique selon la revendication 1, dans lequel les solides fins sont éliminés de la chambre réactionnelle par une combinaison :
d'une élutriation de solides fins avec la vapeur d'hydrocarbures ; et
d'une séparation de solides fins d'avec le lit de solides grossiers par tamisage à l'intérieur de la chambre réactionnelle et convoyage des solides fins hors de la chambre réactionnelle par une goulotte hélicoidale.

4. Procédé thermique selon la revendication 3, dans lequel l'huile introduite est déchargée de façon à être en contact avec la paroi circonférentielle du récipient.

5. Procédé thermique selon la revendication 3, dans lequel l'huile introduite est déchargée de façon à être en contact avec le lit de solides grossiers.

6. Procédé thermique selon la revendication 3, dans lequel l'huile introduite est préchauffée, à une température suffisante pour vaporiser l'eau, avant d'être déchargée dans la chambre réactionnelle.

7. Procédé thermique selon la revendication 4, 5 ou 6, dans lequel les solides grossiers sont constitués d'une pluralité de copeaux en acier.

8. Procédé thermique selon la revendication 1, dans lequel les contaminants comprennent des métaux et des solides fins.

9. Procédé thermique selon la revendication 6, dans lequel les contaminants comprennent de l'eau.
